Europäisches Patentamt

European Patent Office

Office européen des brevets

(19)

(11) **EP 0 668 485 B1**

(12) **EUROPÄISCHE PATENTSCHRIFT**

(45) Veröffentlichungstag und Bekanntmachung des Hinweises auf die Patenterteilung:
**11.03.1998 Patentblatt 1998/11**

(51) Int Cl.$^6$: **G01C 17/38**

(21) Anmeldenummer: **95100161.9**

(22) Anmeldetag: **07.01.1995**

(54) **Verfahren zur Rekonstruktion des Gierwinkels eines Fahrzeugs aus fehlerbehafteten Rohdaten**

Method for reproducing vehicle yaw angle from erroneous data

Procédé de réconstruction du cap d'un véhicule de données erronées

(84) Benannte Vertragsstaaten:
**AT BE CH DE FR GB LI NL**

(30) Priorität: **18.02.1994 DE 4405180**

(43) Veröffentlichungstag der Anmeldung:
**23.08.1995 Patentblatt 1995/34**

(73) Patentinhaber: **Mannesmann VDO AG
60326 Frankfurt (DE)**

(72) Erfinder: **Hertzner, Dipl.-Phys. Dr. Alfred
D-78089 Unterkirnach (DE)**

(56) Entgegenhaltungen:
**EP-A- 0 496 508          WO-A-88/05153
DE-A- 4 034 965          DE-C- 4 234 651**

**Beschreibung**

Die Erfindung betrifft ein Verfahren gemäß dem Oberbegriff des ersten Anspruchs. Ein derartiges Verfahren wird insbesondere in Verbindung mit einem Fahrzeugdatenerfassungsgerät verwendet. Die bevorzugte, jedoch nicht ausschließliche Anwendung bezieht sich auf die Verwendung in einem Unfalldatenspeicher, mit dem die Bewegungsdaten eines Fahrzeugs zum Zwecke der Rekonstruktion der Bewegungsbahn des Fahrzeugs erfaßt werden. Die für die Anwendung des erfindungsgemäßen Verfahrens benötigten Rohdaten können beispielsweise mit einem Magnetfeldkompaß als Sensor erfaßt werden.

Unter realen Betriebsbedingungen unterliegen Messungen des Erdmagnetfeldes in einem Fahrzeug diversen Störeinflüssen. Das Nutzsignal wird zum einen von Magnetfeldern überlagert, die im Fahrzeuginneren durch elektrische Ströme von Fahrzeugaggregaten hervorgerufen werden. Ferner treten äußere Magnetfelder zB von Hochspannungsleitungen hinzu, oder das Erdmagnetfeld wird lokal durch ferromagnetische Körper, wie Straßenbahnschienen, Brükken, Leitplanken, Kanaldeckel oder ähnlichem, verzerrt und führt damit zu fehlerbehafteten Meßdaten, da der Sensor als solcher die Störungen vom Nutzsignal nicht zu separieren vermag.

Eine weitere wesentliche Fehlerquelle bei der Bestimmung des Gierwinkels sind fahrdynamische Einflüsse. Durch Nick- und Wankbewegungen des Fahrzeugs ändern sich die Magnetfeldkomponenten, die von dem mit dem Fahrzeug fest verbundenen Sensor erfaßt werden, dem Betrage nach, weil sich durch die Fahrzeugbewegung die Projektion der Magnetfeldkomponenten in die jeweilige Erfassungsrichtung des Sensors ändert. Außerdem kann sich durch verschiedentliche Einwirkungen die Magnetisierung der Fahrzeugkarosserie ändern.

Alle diese Störeinflüsse sind richtungsabhängig. Unter Zuhilfenahme der Meßdaten weiterer Sensoren, zB von Beschleunigungssensoren für die Fahrzeuglängs- und Fahrzeugquerbeschleunigung, lassen sich diese Störungen als solche zwar erkennen, jedoch nicht kompensieren.

Ein Verfahren zum Korrigieren der Gierwinkelsbestimmung ist aus EP 0496508 bekannt.

Die Aufgabe der Erfindung besteht nun darin, ein Verfahren aufzuzeigen, daß diese bei der Erfassung des Gierwinkels eines Fahrzeugs vom Meßprinzip bedingten Fehler unter Verwendung weiterer im Fahrzeug meßbarer Fahrzeugbewegungsdaten kompensiert, um eine höhere Meßgenauigkeit zu erzielen.

Die Aufgabe wird durch die Merkmale des ersten Anspruchs gelöst. Die weiteren Ansprüche zeigen vorteilhafte Ausgestaltungen der erfindungsgemäßen Lösung.

Das vorgeschlagene Verfahren stützt die zur Verfügung stehenden Winkeldaten an den problematischen Meßpunkten und bestimmt aus den brauchbaren Winkeldaten die freien Parameter zu den anderen Meßdaten.

Im einzelnen beinhaltet das erfindungsgemäße Verfahren folgende Schritte:

Fehlerbehaftete Rohdaten des Gierwinkels $\psi$ und der Gierwinkelgeschwindigkeit $\omega(\alpha)$ mit

$\alpha = \{\alpha_k\}$ mit k = 1, 2, ..., z als die Parameter dieser beiden Meßgrößen, wobei die Parameter beispielsweise

$\alpha_1$ = Temperaturabhängigkeit des Meßwertes,

$\alpha_2$ = Wanksteifigkeit des Fahrzeugs,

$\alpha_3$ = Skalierungsfaktor der Meßwerte usw. bedeuten können, werden als eine Folge von Meßpunkten $\psi_i = \psi(t_i)$ und $\omega_i = \omega(\alpha, t_i)$ zu den Zeitpunkten $t_i$ mit i = 0, 1, 2, ..., N entweder durch im Fahrzeug installierte Sensoren direkt erfaßt oder anhand eines kinematischen Modells aus der Fahrzeuglängsgeschwindigkeit $v_l$ und der Fahrzeugquerbeschleunigung $a_q$ bzw. anhand komplexerer, kinetischer Fahrzeugmodelle aus der Fahrzeuglängsbeschleunigung $a_l$ und der Fahrzeugquerbeschleunigung $a_q$ berechnet, wobei die Parameter $\alpha$ von $\omega(\alpha)$ ungenau, unbekannt und damit frei sein können. In der Praxis können auch die Gierwinkeldaten $\psi$ von diversen Parametern, wie zB von Skalierungsfaktoren oder Temperatureinflüssen, abhängig sein, jedoch soll hier der übersichtlichkeithalber auf die Darstellung dieser Parameter verzichtet werden, wenngleich das erfindungsgemäße Verfahren auch diese Parameter zu verarbeiten vermag.

Solange der Schwimmwinkel des Fahrzeugs, dh der Winkel zwischen dessen Längsachse und der Richtung seiner Momentangeschwindigkeit klein ist, läßt sich die Gierwinkelgeschwindigkeit $\omega$ anhand eines kinematischen Punktmodells, bei dem nur das dynamische Verhalten eines festen Fahrzeugpunktes, zB des Fahrzeugschwerpunktes oder des Mittelpunktes der Hinterachse, betrachtet wird, oder mittels kinetischer Fahrzeugmodelle mit einer Vielzahl verschiedener freier Parameter aus der Fahrzeuglängsgeschwindigkeit $v_l$ und der Fahrzeugquerbeschleunigung $a_q$ und/oder der Fahrzeuglängsbeschleunigung $a_l$ bestimmen. Jedoch besitzen diese Modelle freie Parameter, wie die Wanksteifigkeit, das vom Beladungszustand des Fahrzeugs abhängige Trägheitsmoment, Reifenparameter und andere, die nicht oder nur ungenau bekannt sind, so daß eine aus den Modellen hergeleitete Gierwinkelgeschwindigkeit den wahren Wert nur recht unvollkommen wiedergeben kann.

Andererseits nehmen auch die Temperaturempfindlichkeit der Sensoren sowie ihre Einbaulage im Fahrzeug und ihre Skalierung erheblichen Einfluß auf die Genauigkeit der erfaßten Meßwerte. Der Einsatz eines eigenständigen Sensors zur direkten Erfassung der Gierwinkelgeschwindigkeit wäre natürlich möglich, jedoch wären auch seine Meßdaten mit Meßfehlern behaftet. Entsprechendes gilt, wenn man die Gierwinkelgeschwindigkeit aus den Signalen von ABS-Sensoren gewinnen wollte.

Der zweite Verfahrensschritt sieht dann folgendes vor:

Für beide Meßgrößen $\psi$ und $\omega(\alpha)$ wird jeweils eine an den Leistungsdaten der Sensoren oder an dem Geltungsbereich der verwendeten Modelle orientierte Bewertungsfunktion $\mu_\psi(t)$ und $\mu_\omega(t)$ festgelegt, wobei beide Bewertungsfunktionen die Rohdaten $\psi_i = \psi(t_i)$ und $\omega_i = \omega(\alpha, t_i)$ auf Zahlenwerte im Intervall von 0 bis 1 abbilden, wobei $\mu(t_i) = 0$ einen unbrauchbaren Wert des entsprechenden Datensatzes zur Zeit $t_i$ und $\mu(t_i) = 1$ einen maximal brauchbaren, dh exakten Wert bedeutet, so daß durch die Anwendung der Bewertungsfunktion auf die Rohdaten

$\psi_i = \psi(t_i)$ und $\omega_i = \omega(\alpha, t_i)$ gemäß der Nomenklatur der Fuzzy Logic die unscharfen Mengen

$M_\psi = \{\psi(t_i), \mu_\psi(t_i) \mid i = 0, 1, 2, ... N\}$ mit den brauchbaren Winkeldaten und

$M_\omega = \{\omega(t_i), \mu_\omega(t_i) \mid i = 0, 1, 2, ... N\}$ mit den brauchbaren Winkelgeschwindigkeitsdaten entstehen. In der Fuzzy Logik werden die Bewertungsfunktionen $\mu_\psi(t)$ und $\mu_\omega(t)$ auch Zugehörigkeitsfunktionen genannt.

Dieser Verfahrensschritt weist den einzelnen Meßwerten Zahlenwerte zwischen 0 und 1 zu, die ein Maß dafür sind, wie glaubwürdig die erfaßten bzw. ermittelten Daten sind. Bei der Gestaltung der Zugehörigkeitsfunktionen $\mu_\psi$ und $\mu_\omega$ wird man berücksichtigen, in welchem Meßwertbereich man mit größerer Wahrscheinlichkeit einigermaßen genaue Meßwerte erhalten wird und in welchen Meßwertbereichen das Vertrauen in die Meßwerte bedingt durch die Meßbedingungen oder das Ermittlungsverfahren als geringer eingestuft werden muß. Die Bewertung der Meßwerte erfolgt somit nach Maßgabe technischer Überlegungen und versucht alle vorhersehbaren Störungen zu berücksichtigen.

Aus den beiden Bewertungsfunktionen $\mu_\psi(t)$ und $\mu_\omega(t)$ wird im dritten Verfahrensschritt eine einzige Korrekturfunktion K(t) gebildet, wobei sich die Korrekturfunktion K(t) entweder zu

$K(t_i) := \mu_{M\psi} \cup c(M\omega)(t_i) := \max(\mu_\psi(t_i), 1 - \mu_\omega(t_i))$ ergibt, wenn sich die Korrektur a priori primär auf die Gierwinkeldaten stützen soll, oder, falls den Gierwinkelgeschwindigkeitsdaten von vornherein der Vorzug gegeben werden soll, wird die Korrekturfunktion K(t) zu

$K(t_i) := \mu_{M\psi} \cap c(M\omega)(t_i) := \min(\mu_\psi(t_i), 1 - \mu_\omega(t_i))$ gewählt. Dabei bezeichnet $c(M\omega)$ das Komplement zu $M\omega$.

Den Gierwinkeldaten wird man dann den Vorzug geben, wenn der Sensor zur Erfassung der Gierwinkeldaten aufgrund seiner baulichen Beschaffenheit bereits eine hohe Genauigkeit besitzt. Die Präferenz für die eine oder andere Art der Korrekturfunktion erfolgt demnach nach den tatsächlichen Gegebenheiten vor Ort.

Letztlich wird auf die freien Parameter $\alpha$ der Rohdaten $\omega_i = \omega(\alpha, t_i)$ zur Erzeugung eines Satzes optimaler freier Parameter $\alpha_{opt}$ und zur Erzeugung einer Folge von zu jedem Erfassungszeitpunkt $t_i$ optimal korrigierter Gierwinkelwerte $\psi_{opt}(t_i)$ ein iteratives Optimierungsverfahren angewendet, wobei eine Kostenfunktion

$$F(\alpha_1, \alpha_2, ..., \alpha_k) := {}_{i=1}\Sigma^N \, [\Delta_i(\alpha_1, \alpha_2, ..., \alpha_k)]^2$$

minimiert wird, die

aus den Rohdaten des Gierwinkels $\psi_i = \psi(t_i)$,
aus den integrierten Daten der Gierwinkelgeschwindigkeit $\omega_i = \omega(\alpha, t_i)$ und aus der Korrekturfunktion K(t) berechnet wird,

und wobei die einzelnen Schritte des iterativen Optimierungsverfahrens wie folgt festgelegt sind:

(i) Schritt 1

$$\psi_0^{kor} = \psi(t_0)$$

(ii) Schritt von i nach i+1, i=1, 2, ..., N-1

$$\psi' = \psi_i^{kor} + {}_{t_i}\!\int^{t_{i+1}} \omega(t)dt$$

$$\psi_{i+1}^{kor} = \psi' + \Delta_{i+1} \text{ mit } \Delta_{i+1} := K(t_{i+1}) * (\psi(t_{i+1}) - \psi'),$$

für i=1, 2, ..., N,
wobei $\psi_i^{kor}$ den korrigierten Gierwinkel zum Zeitpunkt $t_i$ und $\Delta_i$ den entsprechenden Korrekturwert bezeichnet.

Zur Ermittlung von $\psi'$ wird die Integration von $t_i$ nach $t_{i+1}$ durch Anwendung einer Quadraturformel durchgeführt. Die Anwendung einer Sehnentrapezformel kann vorteilhaft sein.

Ferner empfiehlt es sich, das Minimum der Kostenfunktion $F(\alpha_1, \alpha_2, ..., \alpha_k)$ durch ein Gradientenverfahren zu bestimmen.

Die Festlegung der Zugehörigkeitsfunktion $\mu_\psi(t)$ kann, wie zuvor beschrieben, durch eine direkte Bewertung einer repräsentativen Auswahl von Winkeldaten $\psi$ unter Berücksichtigung aller Störeinflüsse erfolgen. Für die Festlegung der Zugehörigkeitsfunktion zu den restlichen Winkeldaten führt die Berechnung mittels Splineinterpolation zu guten Ergebnissen.

Das im vierten Verfahrensschritt beschriebene Optimierungsverfahren geht von einem Parametersatz ($\alpha_1, \alpha_2, ..., \alpha_k$) aus, dessen Werte $\alpha_1, \alpha_2, ..., \alpha_k$ zunächst frei gewählt werden können. Dabei werden für die unbekannten Parameter $\alpha$ irgendwelche plausiblen Werte angenommen. Mit diesem Parametersatz beschafft man sich im ersten Iterationsschritt ein korrigiertes Gierwinkelsignal, so daß es möglich ist, die Gierwinkelgeschwindigkeit $\omega$ näherungsweise als Zwischengröße $\omega_i^*$ zu allen Meßpunkten $t_i$ zu berechnen. Mit den angegebenen Formeln wird dann ausgehend von der ersten Zwischengröße $\omega_i^*$ eine zweite Zwischengröße $\omega_i^{**}$ berechnet, wobei der Parametersatz ($\alpha_1, \alpha_2, ..., \alpha_k$) im Sinne einer besseren Anpassung an den zu erzielenden Meßwertverlauf in seinen Werten geändert wird. Dieser Prozeß wird solange fortgesetzt, bis die Kostenfunktion $F(\alpha_1, \alpha_2, ..., \alpha_k)$ einen Minimalwert annimmt. Dabei ist die Quadratsumme $\sum_{i=1}^{N} [\Delta_i(\alpha_1, \alpha_2, ..., \alpha_k)]^2$ ein Maß für die Güte der Korrektur. Je kleiner die Quadratsumme ist, desto besser ist die Korrektur. Letztlich erhält man auf diese Weise einen optimalen Parametersatz ($\alpha_1, \alpha_2, ..., \alpha_k$), mit dem ein optimal korrigierter Gierwinkel $\psi$ bestimmbar ist.

Die vorteilhafte Wirkung des erfindungsgemäßen Verfahrens soll nun noch anhand eines Beispiels verdeutlicht werden. Ein Fahrzeug wird dazu mit einem Datenerfassungsgerät ausgestattet, welches die benötigten Rohdaten erfaßt. Bei einer Testfahrt wird ein Oval von 60 m Länge und 25 m Breite mit einer Geschwindigkeit von ca. 35 km/h durchfahren.

Die Bahnrekonstruktion dieses Fahrmanövers ist aufgrund der langen Geradeausphasen sehr anfällig für Fehler des Gierwinkels $\psi$. Infolge der verhältnismäßig hohen Querbeschleunigungen $a_q$ von bis ca. 8 m/s$^2$ treten Wankwinkeländerungen bis zu 10° auf, weshalb durch diese fahrdynamischen Einflüsse bei der Erfassung des Gierwinkels $\psi$, Meßungenauigkeiten bis zu 30° auftreten.

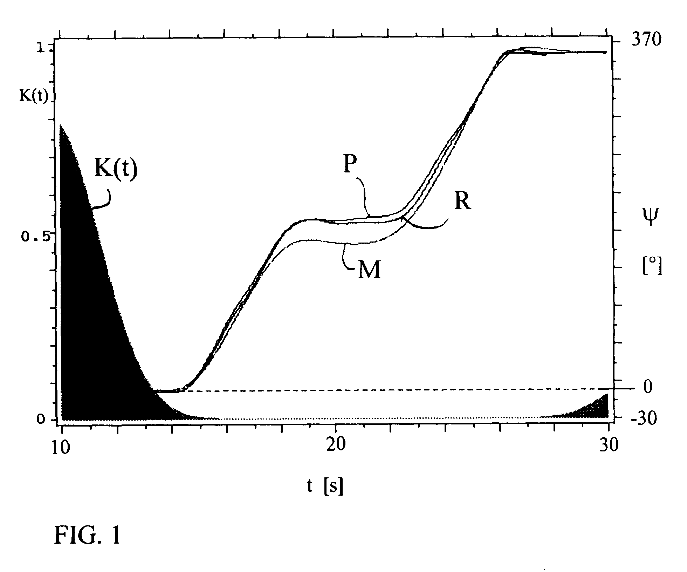

Wie aus der Figur 1 ersichtlich, wurde zur Durchführung des erfindungsgemäßen Verfahrens die Zugehörigkeitsfunktion $\mu_\psi$ so gewählt, daß zu Beginn der Fahrt die Gierwinkeldaten mit einer Sicherheit von 80 % und zum Ende der Fahrt mit maximal 10 % bewertet wurden.

Zur Stützung des Gierwinkels $\psi$, wurde gemäß Figur 1 die Gierwinkelgeschwindigkeit $\omega$ mit Hilfe eines kinematischen Punktmodells aus der Fahrzeuglängsgeschwindigkeit $v_1$ und der Fahrzeugquerbeschleunigung $a_q$ nach der Formel $\omega = \alpha_1 * (a_q - \alpha_2) / v_l$ berechnet, wobei $\alpha_1 = \beta_2 * \beta_3$ und $\alpha_2 = \beta_1 / \beta_2$ bedeuten mit $\beta_1 =$ die Temperaturabhängigkeit des Meßsignals der Querbeschleunigung $a_q$, / $\beta_2 =$ der Einfluß ungenauer Skalierung und $\beta_3 =$ die Wanksteifigkeit des Fahrzeugs.

Vergleicht man die Gierwinkeldaten, die man in dieser Testfahrt alleine aus den Meßdaten des Magnetfeldkompasses gewinnt, dh den Kurvenverlauf M, mit dem Verlauf des Referenzwinkels R, so zeigt sich ein mittlerer Fehler von 8° und ein maximaler Fehler von 23°. Diese Ungenauigkeit ist zB für eine Unfallrekonstruktion nicht tolerierbar. Die Anwendung des erfindungsgemäßen Verfahrens reduziert den mittleren Winkelfehler auf 3° und den maximalen Fehler auf 8°, wie es der Kurvenverlauf P zeigt.

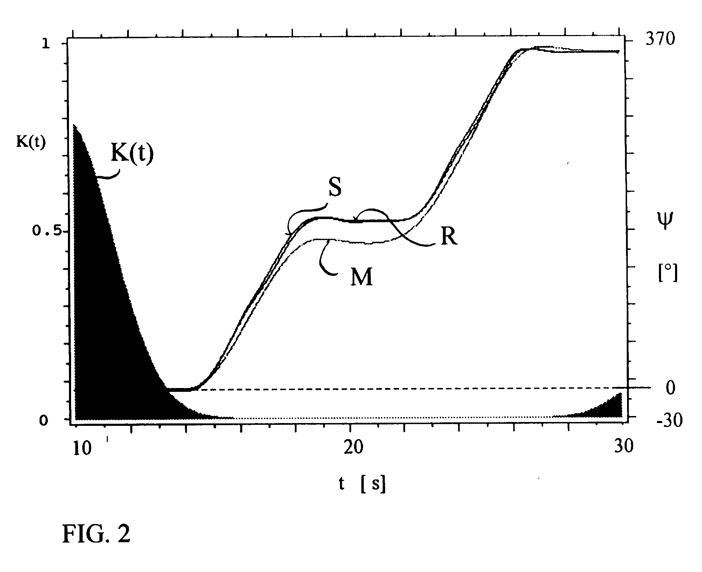

Die Figur 2 zeigt die entsprechenden Kurven, wenn ein zusätzlicher Gierwinkelgeschwindigkeitssensor benutzt wird, um mit dessen Daten den Gierwinkel $\psi$ zu stützen. Die temperaturabhängigen Parameter sowie die Skalierung dieses Sensors wurden dabei ihrem Betrage nach aus den Daten des Magnetfeldsensors hergeleitet. Der mittlere Fehler konnte, wie im Kurvenverlauf S dargestellt, so auf 1,6° und der maximale Fehler auf 4° reduziert werden.

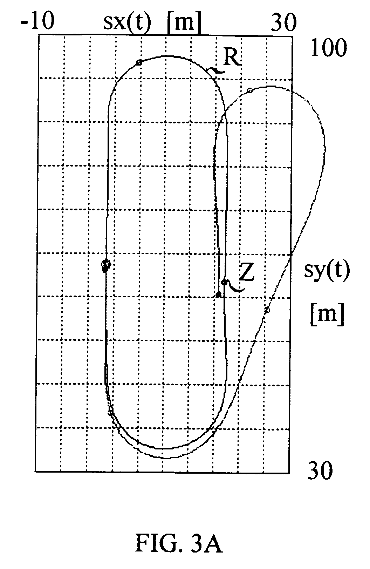

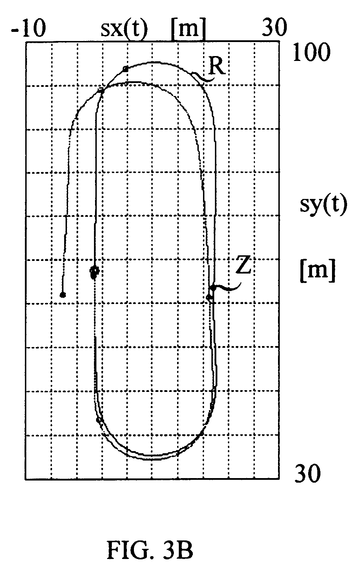

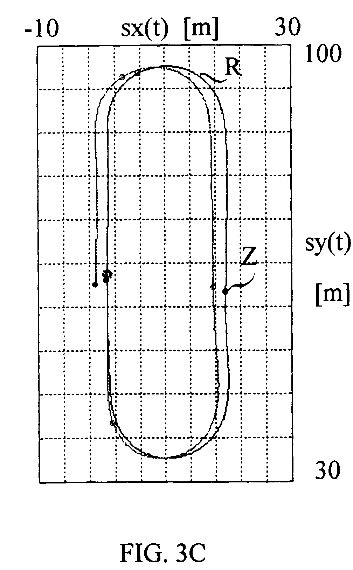

Die Figur 3 zeigt jeweils im Vergleich mit der Referenzbahn R den Einfluß der jeweiligen Korrektur des Gierwinkels $\psi$ auf die Bahnrekonstruktion, und zwar im Figurenteil 3 A die Rekonstruktion der Bewegungsbahn des Fahrzeugs allein aus den Daten eines Magnetfeldsensors, im Figurenteil 3 B die Rekonstruktion bei Stützung des Gierwinkels $\psi$ durch Daten aus einem Punktmodell und im Figurenteil 3 C die Rekonstruktion nach der Stützung des Gierwinkels $\psi$ mit einem zusätzlichen, die Gierwinkelgeschwindigkeit $\omega$ erfassenden Sensors.

**Patentansprüche**

1. Verfahren zur Rekonstruktion des Gierwinkels eines Fahrzeugs aus fehlerbehafteten Rohdaten, gekennzeichnet durch folgende Schritte:

a. Fehlerbehaftete Rohdaten des Gierwinkels $\psi$ und der Gierwinkelgeschwindigkeit $\omega(\alpha)$ mit

$\alpha = \{\alpha_k\}$ mit k = 1, 2, ..., z als die Parameter dieser beiden Meßgrößen, wobei die Parameter insbesondere
$\alpha_1$ = die Temperaturabhängigkeit des Meßwertes,
$\alpha_2$ = die Wanksteifigkeit des Fahrzeugs,
$\alpha_3$ = den Skalierungsfaktor der Meßwerte usw. bedeuten, werden als eine Folge von Meßpunkten $\psi_i = \psi(t_i)$ und $\omega_i = \omega(\alpha, t_i)$ zu den Zeitpunkten $t_i$ mit i = 0, 1, 2, ..., N entweder durch Sensoren im Fahrzeug direkt erfaßt oder anhand eines kinematischen Modells aus der Fahrzeuglängsgeschwindigkeit $v_l$ und der Fahrzeugquerbeschleunigung $a_q$ bzw. anhand komplexerer, kinetischer Fahrzeugmodelle aus der Fahrzeuglängsbeschleunigung $a_l$ und der Fahrzeugquerbeschleunigung $a_q$ berechnet, wobei einige Parameter $\alpha$ von $\omega(\alpha)$ und ggf. von $\psi$ ungenau, unbekannt oder frei sind.

b. Für beide Meßgrößen $\psi$ und $\omega(\alpha)$ wird jeweils eine an den Leistungsdaten der Sensoren oder an dem Geltungsbereich der verwendeten Modelle orientierte Bewertungsfunktion $\mu_\psi(t)$ und $\mu_\omega(t)$ festgelegt, wobei beide Bewertungsfunktionen die Rohdaten $\psi_i = \psi(t_i)$ und $\omega_i = \omega(\alpha, t_i)$ auf Zahlenwerte im Intervall von 0 bis 1 abbilden, wobei $\mu(t_i) = 0$ einen unbrauchbaren Wert des entsprechenden Datensatzes zur Zeit $t_i$ und $\mu(t_i) = 1$ einen maximal brauchbaren, dh exakten Wert bedeutet, so daß durch die Anwendung der Bewertungsfunktion auf die Rohdaten $\psi_i = \psi(t_i)$ und $\omega_i = \omega(\alpha, t_i)$ die unscharfen Mengen

$M_\psi = \{\psi(t_i), \mu_\psi(t_i) \mid i = 0, 1, 2, ... N\}$ mit den brauchbaren Winkeldaten und
$M_\omega = \{\omega(t_i), \mu_\omega(t_i) \mid i = 0, 1, 2, ... N\}$ mit den brauchbaren Winkelgeschwindigkeitsdaten entstehen.

c. Aus den beiden Bewertungsfunktionen $\mu_\psi(t)$ und $\mu_\omega(t)$ wird eine einzige Korrekturfunktion K(t) gebildet, wobei sich die Korrekturfunktion K(t) entweder zu
$K(t_i) := \mu_{M_\psi \cup c(M\omega)}(t_i) := \max(\mu_\psi(t_i), 1 - \mu_\omega(t_i))$ ergibt, wenn sich die Korrektur a priori primär auf die Gierwinkeldaten stützen soll, oder,
falls den Gierwinkelgeschwindigkeitsdaten von vornherein der Vorzug gegeben werden soll, wird die Korrekturfunktion K(t) zu $K(t_i) := \mu_{M_\psi \cap c(M\omega)}(t_i) := \min(\mu_\psi(t_i), 1 - \mu_\omega(t_i))$ gewählt.

d. Auf die freien Parameter $\alpha$ der Rohdaten $\psi_i = \psi(t_i)$ und $\omega_i = \omega(\alpha, t_i)$ wird zur Erzeugung eines Satzes optimaler freier Parameter $\alpha_{opt}$ und zur Erzeugung einer Folge von zu jedem Erfassungszeitpunkt $t_i$ optimal korrigierter Gierwinkelwerte $\psi_{opt}(t_i)$ ein iteratives Optimierungsverfahren angewendet, wobei eine Kostenfunktion

$$F(\alpha_1, \alpha_2, ..., \alpha_k) := \sum_{i=1}^{N} [\Delta_i(\alpha_1, \alpha_2, ..., \alpha_k)]^2$$

minimiert wird, die

aus den Rohdaten des Gierwinkels $\psi_i = \psi(t_i)$,
aus den integrierten Daten der Gierwinkelgeschwindigkeit $\omega_i = \omega(\alpha, t_i)$ und
aus der Korrekturfunktion K(t) berechnet wird,

und wobei die einzelnen Schritte des iterativen Optimierungsverfahrens wie folgt festgelegt sind:

(i) Schritt 1

$$\psi_0^{kor} = \psi(t_0)$$

(ii) Schritt von i nach i+1, i=1, 2, ..., N-1

$$\psi' = \psi_i^{kor} + \int_{t_i}^{t_{i+1}} \omega(t)dt$$

$$\psi_{i+1}^{kor} = \psi' + \Delta_{i+1} \text{ mit } \Delta_{i+1} := K(t_{i+1}) * (\psi(t_{i+1}) - \psi'),$$

für i=1, 2, ..., N,

wobei $\psi_i^{kor}$ den korrigierten Gierwinkel zum Zeitpunkt $t_i$ und $\Delta_i$ den entsprechenden Korrekturwert bezeichnet.

**2.** Verfahren nach Anspruch 1, dadurch gekennzeichnet, daß bei der Ermittlung von $\psi'$ die Integration von $t_i$ nach $t_{i+1}$ durch eine Quadraturformel, insbesondere eine Sehnentrapezformel, erfolgt.

**3.** Verfahren nach Anspruch 1 oder 2, dadurch gekennzeichnet, daß das Minimum der Kostenfunktion $F(\alpha_1, \alpha_2, ..., \alpha_k)$ durch ein Gradientenverfahren bestimmt wird.

**4.** Verfahren nach einem der vorangegangenen Ansprüche, dadurch gekennzeichnet, daß die Festlegung der Bewertungsfunktion $\mu_\psi(t)$ durch eine direkte Bewertung einer repräsentativen Auswahl von Winkeldaten $\psi$ unter Berücksichtigung aller Störeinflüsse erfolgt und die Bewertungsfunktion zu den restlichen Winkeldaten mittels Splineinterpolation berechnet wird.

**Claims**

**1.** Method for reconstructing the yaw angle of a vehicle from inaccurate raw data, characterised by the following steps:

  a. Inaccurate raw data of the yaw angle $\psi$ and of the yaw angular velocity $\omega(\alpha)$, where $\alpha = \{\alpha_k\}$ where k = 1, 2, ..., z, as the parameters of these two measured quantities, the parameters denoting, in particular,

   $\alpha_1$ = the temperature dependence of the measured value,
   $\alpha_2$ = the roll stiffness of the vehicle,
   $\alpha_3$ = the scaling factor of the measured values etc., are either directly acquired by sensors in the vehicle or calculated from the vehicle longitudinal velocity $v_l$ and the vehicle transverse acceleration $a_t$ using a kinematic model or from the vehicle longitudinal acceleration $a_1$ and the vehicle transverse acceleration $a_t$ using more complex kinetic vehicle models, as a series of measuring points $\psi_i = \psi(t_i)$ and $\omega_i = \omega(\alpha, t_i)$ at the instants $t_i$ where i = 0, 1, 2, ..., N, some parameters $\alpha$ of $\omega(\alpha)$ and if appropriate of $\psi$ being inaccurate, unknown or arbitrary.

  b. For both measured quantities $\psi$ and $\omega(\alpha)$, a respective rating function $\mu_\psi(t)$ and $\mu_\omega(t)$ based on the performance data of the sensors or on the scope of the models used is determined, both rating functions mapping the raw data $\psi_i = \psi(t_i)$ and $\omega_i = \omega(\alpha, t_i)$ onto numerical values in the range from 0 to 1, where $\mu(t_i) = 0$ denotes an unusable value of the corresponding data record at the time $t_i$ and $\mu(t_i) = 1$ denotes a maximally usable, i.e. exact value, so that by applying the rating function to the raw data $\psi_i = \psi(t_i)$ and $\omega_i = \omega(\alpha, t_i)$, the fuzzy sets

   $M_\psi = \{\psi(t_i), \mu_\psi(t_i) \mid i = 0, 1, 2, ... N\}$ containing the usable angle data and
   $M_\psi = \{\omega)(t_i), \mu_\omega(t_i) \mid i = 0, 1, 2, ... N\}$ containing the usable angular velocity data result.

  c. A single correcting function K(t) is formed from the two rating functions $\mu_\psi(t)$ and $\mu_\omega(t)$, where the correcting function K(t) is either
  $K(t_i) := \mu_{M\psi \cup c(M\omega)}(t_i) := max(\mu_\psi(t_i), 1 - \mu_\omega(t_i))$, when the correction is to be based a priori primarily on the yaw angle data, or, if the yaw velocity data is to be given preference from the outset, the correcting function K(t) is chosen as
  $K(t_i) ) := \mu_{M\psi \cap c(M\omega)}(t_i) := min(\mu_\psi(t_i), 1 - \mu_\omega(t_i))$.

  d. An iterative optimisation method is applied to the arbitrary parameters a of the raw data $\psi_i = \psi(t_i)$ and $\omega_i = \omega(\alpha, t_i)$ to produce a set of optimal arbitrary parameters $\alpha_{opt}$ and to produce a series of yaw angle values $\psi_{opt}(t_i)$ optimally corrected at every acquisition instant $t_i$, where a cost function

$$F(\alpha_1, \alpha_2, ..., \alpha_k) := {}_{i=1}\Sigma^N [\Delta_i(\alpha_1, \alpha_2, ..., \alpha_k)]^2,$$

  which is calculated from the raw data of the yaw angle $\psi_i = \psi(t_i)$, from the integrated data of the yaw velocity $\omega_i = \omega(\alpha, t_i)$ and from the correcting function K(t), is minimised, and where the individual steps of the iterative optimisation method are defined as follows:

(i) Step 1

$$\psi_o{}^{cor} = \psi(t_o)$$

(ii) Step from i to i+1, i=1, 2, ..., N-1

$$\psi' = \psi_i{}^{cor} + {}_{ti}\!\int^{ti+1} \omega(t)dt$$

$$\psi_{i+1}{}^{cor} = \psi' + \Delta_{i+1} \text{ where } \Delta_{i+1} := K(t_{i+1}) * (\psi(t_{i+1}) - \psi'),$$

for i=1, 2, ..., N,

where $\psi_i^{cor}$ denotes the corrected yaw angle at the instant $t_i$ and $\Delta_i$ the corresponding correction value.

2. Method according to Claim 1, characterised in that, in determining $\psi'$, the integration from $t_i$ to $t_{i+1}$ is carried out by means of a quadrature formula, in particular a trapezoidal formula.

3. Method according to Claim 1 or 2, characterised in that the minimum of the cost function $F(\alpha_1, \alpha_2, ..., \alpha_k)$ is determined by a gradient method.

4. Method according to one of the preceding claims, characterised in that the rating function $\mu_\psi(t)$ is determined by a direct rating of a representative selection of angle data $\psi$ while taking account of all interfering influences, and the rating function regarding the remaining angle data is calculated by means of spline interpolation.

**Revendications**

1. Procédé pour la reconstruction de l'angle d'embardée d'un véhicule à partir de données brutes entachées d'erreurs, caractérisé par les phases suivantes :

a. Des données brutes entachées d'erreurs de l'angle d'embardée $\psi$ et de la vitesse de l'angle d'embardée $\omega$ ($\alpha$) avec

$\alpha = \{\alpha_k\}$ avec k = 1, 2 ..., z en tant que les paramètres de ces deux grandeurs de mesure, les paramètres pouvant, tout particulièrement, signifier
$\alpha_1$ = la dépendance de la température de la grandeur de mesure,
$\alpha_2$ = la rigidité au roulis du véhicule,
$\alpha_3$ = le facteur de cadrage des valeurs de mesure etc., seront, comme une séquence de points de mesure $\psi_i = \psi(t_i)$ et $\omega_i = \omega(\alpha, t_i)$ aux instants $t_i$ avec i = 0, 1, 2 N soit directement relevés par des capteurs installés dans le véhicule ou calculés, à l'aide d'un modèle cinématique à partir de la vitesse longitudinale du véhicule $v_l$ et de l'accélération transversale du véhicule $a_q$ ou au moyen de modèles de véhicule cinétiques plus complexes, à partir de l'accélération longitudinale du véhicule $\alpha_1$ et de l'accélération transversale du véhicule $a_q$, quelques paramètres $\alpha$ de $\omega(\alpha)$ et, le cas échéant de $\psi$ étant imprécis, inconnus ou libres.

b. Pour les deux grandeurs de mesure $\psi$ et $\omega(\alpha)$ sera respectivement déterminée une fonction de pondération $\mu_\psi(t)$ et $\mu_\omega(t)$ orientées aux données de puissance des capteurs ou au domaine de validité des modèles utilisés, les deux fonctions de pondération représentant les données brutes $\psi_i = \psi(t_i)$ et $\omega_i = \omega(\alpha, t_i)$ sur des valeurs numériques dans l'intervalle de 0 à 1, $\mu(t_i) = 0$ signifiant une valeur inutilisable du jeu de données correspondant à l'instant $t_i$ et $\mu(t_i) = 1$ une valeur utilisable au maximum, c'est-à-dire une valeur exacte, si bien que l'application de la fonction de pondération aux données brutes $\psi_i = \psi(t_i)$ et $\omega_i = \omega(\alpha, t_i)$ donne naissance aux ensembles flous

$M_\psi = \{\psi(t_i), \mu_\psi(t_i) / i = 0, 1, 2, ... N\}$ avec les données angulaires utilisables et
$M_\omega = \{\omega(t_i), \mu_\omega(t_i) / i = 0, 1, 2, ... N\}$ avec les données de vitesse angulaire utilisables.

c. A partir des deux fonctions de pondération $\mu_\psi(t)$ et $\mu_\omega(t)$, est formée une unique fonction de correction K (t), ladite fonction de correction K(t) résultant soit pour $K(t_i) := \mu_{M\psi \cup c(M\omega)}(t_i) := \max(\mu_\psi(t_i), 1 - \mu_\omega(t_i))$ lorsque

la correction doit s'appuyer a priori en premier lieu sur les données de l'angle d'embardée ou, au cas où la préférence doit être accordée d'emblée aux données de vitesse de l'angle d'embardée, la fonction de correction K(t) sera choisie

pour $K(t_i) := \mu_{M_{\psi \cap c(M\omega)}}(t_i) := \min(\mu_{\psi}(t_i), 1 - \mu_{\omega}(t_i))$.

d. Aux paramètres libres $\alpha$ des données brutes $\psi_i = \psi(t_i)$ et $\omega_i = \omega(\alpha, t_i)$, sera appliqué, pour la génération d'un jeu de paramètres libres optimaux $\alpha_{opt}$ et pour la génération d'une séquence de valeurs de l'angle d'embardée $\psi_{opt}(t_i)$ corrigées de manière optimale en fonction de chaque instant d'acquisition $t_i$, un procédé d'optimisation itératif dans lequel sera minimisée une fonction de coût

$$F(\alpha_1, \alpha_2, ..., \alpha_k) := {}_{i=1}\Sigma^N [\Delta_i(\alpha_i, \alpha_2, ..., \alpha_k)]^2$$

qui est calculée

à partir des données brutes de l'angle d'embardée $\psi_i = \psi(t_i)$, à partir des données intégrées de la vitesse de l'angle d'embardée $\omega_i = \omega(\alpha, t_i)$ et
à partir de la fonction de correction K(t),

et où les différentes phases du procédé d'optimisation itératif sont déterminées de la manière suivante :

(i) phase 1

$$\psi_0^{kor} = \psi(t_0)$$

(ii) phase de i vers i+1, i=1, 2, ..., N-1

$$\psi' = \psi_i^{kor} + {}_{t_i}\int^{t_{i+1}} \omega(t)dt$$

$$\psi_{i+1}^{kor} = \psi' + \Delta_{i+1} \text{ avec } \Delta_{i+1} := K(t_{i+1}) * (\psi(t_{i+1}) - \psi'),$$

pour i=1, 2, ..., N,
$\psi_i^{kor}$ désignant l'angle d'embardée corrigé à l'instant $t_i$ et $\Delta_i$ désignant la valeur de correction correspondante.

**2.** Procédé selon la revendication 1,
caractérisé par le fait
que, pour la détermination de $\psi'$, l'intégration de $t_i$ vers $t_{i+1}$ se fait par une formule de quadrature, plus particulièrement une formule trapézoïdale.

**3.** Procédé selon l'une quelconque des revendications 1 ou 2,
caractérisé par le fait
que le minimum de la fonction de coût $F(\alpha_1, \alpha_2, ..., \alpha_k)$ sera déterminé par une méthode de la plus grande pente.

**4.** Procédé selon l'une quelconque des revendications précédentes,
caractérisé par le fait
que la détermination de la fonction de pondération $\mu_{\psi}(t)$ a lieu par une pondération directe d'une sélection représentative de données angulaires $\psi$ compte tenu de toutes les influences perturbatrices et que la fonction de pondération pour les données angulaires restantes est calculée au moyen d'une interpolation spline.

FIG. 1

FIG. 2

FIG. 3A

FIG. 3B

FIG. 3C